# EUROPEAN PATENT APPLICATION

(11) **EP 3 696 067 A1**
(43) Date of publication of application: **19.08.2020**
(21) Application number: 18882046.8
(22) Date of filing: 20.11.2018
(51) Int. Cl.: B62M 6/45, B60L 15/20, B62J 99/00, B62K 5/02, B62K 5/10, B62M 6/50, B62M 6/60

(54) **VEHICLE**

(30) Priority: 21.11.2017 JP 2017223870
(71) Applicant: Daido Metal Co., Ltd., Nagoya-shi, Aichi 460-0008 (JP)
(72) Inventor: HIRAMATSU Masao, Inuyama-shi Aichi 484-0061 (JP)
(74) Representative: Intellectual Property Services GmbH
(86) International application number: PCT/JP2018/042845
(87) International publication number: WO 2019/102997

(57) **Abstract**

Provided is a vehicle that performs position control in accordance with a travel condition such as turning or a change in a road surface. In a vehicle 100 according to the present invention that can be propelled by an activating force of a driver, at least one of a front wheel section and a rear wheel section is structured from a left/right pair of wheels 101, 102, a condition of the vehicle 100 is detected, the rotational force of each of the pair of wheels 101, 102 can be controlled independently of one another in response to the detection, and the pair of wheels 101, 102 are attached to the vehicle 100 via a suspension mechanism 113.

## Description

### TECHNICAL FIELD

The present invention relates to a vehicle that performs position control in accordance with a travel condition such as turning or a change in a road surface and can be propelled by an activating force of a driver.

### BACKGROUND ART

A vehicle that can be propelled by rotating a wheel by an activating force of a driver such as a cycle which has three or more wheels and in which at least one of a front wheel section and a rear wheel section is configured from a left/right pair of wheels (hereinafter, a vehicle whose front wheel section is configured from a pair of wheels will be referred to as "front two-wheeled type vehicle, and a vehicle whose rear wheel section is configured from a pair of wheels will be referred to as "rear two-wheeled type vehicle") is usually stable against an inclination or unsteadiness because of multiple wheels of three or more wheels compared to a bicycle with two wheels in related art in which one wheel is arranged in each of the front wheel section and the rear wheel section. However, because it is difficult to turn a handle due to heavy steering of the handle, the vehicle is likely to be off the course to be traveled in turning in a curve or the like and in traveling on an inclined road surface, a bumpy road surface, or the like. Particularly, because a vehicle whose left/right pair of wheels are fixed may not control the balance of the center of gravity by performing appropriate position control, such a vehicle is abruptly inclined due to sudden turning or sudden braking or an impact from the road surface, and the position of the vehicle is likely to become unstable.

In relation to such a problem, Patent Literature 1 discloses a front two-wheeled type vehicle with three wheels in which a whole link mechanism moves to the left or right in response to the steering of the handle and discloses that the link movability state of the link mechanism is adjusted by using a link angle control device, the link angle control device is attached to a holding section attached to a stem section and a link mechanism section, the link angle control device is set, in a low velocity range, to have a tendency in which the movability state of the link is fixed and, in intermediate and high velocity ranges, to have a tendency in which a movability resistance of the link is removed, in accordance with the opening of an electrical (electromagnetic) servo valve that is controlled from a vehicle body velocity sensor of the wheels via an ECU, the movability state of the link angle of the link mechanism is controlled, and the position of the vehicle body is thereby controlled.

### CITATION LIST

### PATENT LITERATURE

PATENT LITERATURE 1: JP-A-2010-184508

### SUMMARY OF INVENTION

### TECHNICAL PROBLEM

A front two-wheeled type vehicle with three wheels, in which a right wheel and a left wheel in a front wheel section have the same rotational forces as in Patent Literature 1, can improve stability against a positional change in turning in a curve. However, there is a problem that in front two-wheeled type or rear two-wheeled type vehicles that include the front two-wheeled type vehicle with three wheels as in Patent Literature 1, steerability of a handle in a case of turning at a high velocity, positional stability of the vehicle in a case of sudden turning, followability of vehicle control in a case where the center of gravity of the vehicle rapidly changes, and alleviation against inclination of the vehicle are not sufficient.

Accordingly, one object of the present invention is to provide a vehicle which includes a pair of motors which respectively control rotational forces of a left/right pair of wheels in at least one of a front wheel section and a rear wheel section independently of one another, performs position control, in accordance with a travel condition such as turning or a change in a road surface, by further attaching the pair of wheels via a suspension mechanism, secures stability against a position change, and can be propelled by rotating a wheel by an activating force of a driver.

### SOLUTION TO PROBLEM

One aspect of the present invention provides a vehicle in which at least one of a front wheel section and a rear wheel section is configured from a left/right pair of wheels and which is capable of being propelled by an activating force of a driver, in which a condition of the vehicle is detected, a rotational force of each of the pair of wheels is capable of being controlled independently of one another in response to the detection, and the pair of wheels are attached to the vehicle via a suspension mechanism.

According to one specific example of the present invention, in the vehicle, the pair of wheels are capable of being inclined with respect to the vehicle by the suspension mechanism.

According to one specific example of the present invention, in the vehicle, the pair of wheels are capable of operating, independently of one another, with respect to a height direction of the vehicle by the suspension mechanism.

According to one specific example of the present invention, the vehicle includes: a battery; a pair of motors that are connected with the battery and are configured from a motor for controlling a rotational force of one of the pair of wheels and a motor for controlling a rotational force of the other of the pair of wheels; a sensor that detects the condition and transmits a condition signal based on the detection; a vehicle body controller that performs arithmetic processing of the condition signal and transmits a control signal for controlling the pair of motors; and a motor driver that controls power supply between the battery and the pair of motors based on the control signal transmitted from the vehicle body controller, in which the motor driver controls each of outputs of the pair of motors independently of one another to be capable of controlling each of the rotational forces of the pair of wheels independently of one another.

According to one specific example of the present invention, in the vehicle, the sensor includes an inclination sensor that detects an inclination of the vehicle with respect to a perpendicular direction, and the vehicle body controller is capable of performing arithmetic processing of the condition signal transmitted from the sensor so as to correct the condition and of transmitting the control signal.

According to one specific example of the present invention, in the vehicle, the sensor further includes an activating force sensor that detects the activating force by the driver of the vehicle, and the vehicle body controller is capable of performing arithmetic processing of the condition signal transmitted from the sensor so as to correct the condition and of transmitting the control signal.

According to one specific example of the present invention, in the vehicle, the sensor further includes a velocity sensor that detects a velocity of the vehicle, and the vehicle body controller is capable of performing arithmetic processing of the condition signal transmitted from the sensor so as to correct the condition and of transmitting the control signal.

According to one specific example of the present invention, in the vehicle, at least one of the pair of motors has a function of a generator, and the at least one of the pair of motors is capable of providing a reverse rotational torque to the wheel and of supplying power to the battery via the motor driver by recovering travel energy of the vehicle by the function of the generator.

### ADVANTAGEOUS EFFECTS OF INVENTION

According to the present invention, motors are respectively arranged on a pair of wheels, outputs of the pair of motors are controlled independently of one another, rotational forces of the pair of wheels are controlled independently of one another, further the pair of wheels are attached via a suspension mechanism, an inclination of the vehicle due to turning, a change in a road surface, and the like is thereby corrected, and position control corresponding to a travel condition can thereby be performed while unsteadiness is reduced. Further, a condition of the vehicle is detected by a sensor, arithmetic processing is performed based on a detection result thereof, and the rotational forces that are optimal for the pair of wheels and are independent of one another can thereby be generated. In addition, in a case where the position control is performed, the motor is activated as a generator to recover travel energy of the vehicle, and power may be supplied to a battery. Further, because the outputs of the pair of motors can be controlled independently of one another, while one of the motors supplies power from the battery to the motor to provide a forward rotational torque to the wheel, the other of the motors can be activated as a generator to provide a reverse rotational torque to the wheel, and power can be supplied from the motor to the battery.

Other objects, features, and advantages of the present invention will become apparent from the following descriptions of the embodiments of the present invention taken in conjunction with the accompanying drawings.

### BRIEF DESCRIPTION OF DRAWINGS

[FIG. 1] FIG. 1 is a schematic diagram of a vehicle as one embodiment of the present invention as seen from a side.
[FIG. 2A] FIG. 2A is a schematic diagram of the vehicle of FIG. 1 as seen from a front side.
[FIG. 2B] FIG. 2B is a schematic diagram of the vehicle of FIG. 1 as seen from the front side in a case where the vehicle is inclined to the left when seen from a driver.
[FIG. 2C] FIG. 2C is a schematic diagram of a vehicle as another embodiment of the present invention as seen from the front side.
[FIG. 2D] FIG. 2D is a schematic diagram of the vehicle of FIG. 2C as seen from the front side in a case where a road surface has a bump.
[FIG. 2E] FIG. 2E is a schematic diagram of the vehicle of FIG. 2C as seen from the front side in a case where the road surface is inclined.
[FIG. 2F] FIG. 2F is a schematic diagram of the vehicle of FIG. 2C as seen from the front side in a case where the vehicle is inclined to the left when seen from the driver.
[FIG. 2G] FIG. 2G is a perspective diagram that illustrates the relationship between a suspension mechanism and motors in the vehicle of FIG. 2C.
[FIG. 3] FIG. 3 is a diagram that illustrates a condition in which motors in a control device used in the vehicle as the embodiment of the present invention are activated as electric motors.
[FIG. 4] FIG. 4 is a diagram that illustrates a condition in which the motors in the control device used in the vehicle as the embodiment of the present invention are activated as the generators.
[FIG. 5] FIG. 5 is a diagram that illustrates a flowchart of a method for controlling the vehicle as the embodiment of the present invention.

### DESCRIPTION OF EMBODIMENTS

Embodiments of the present invention will hereinafter be described with reference to drawings, but the present invention is not limited to those embodiments.

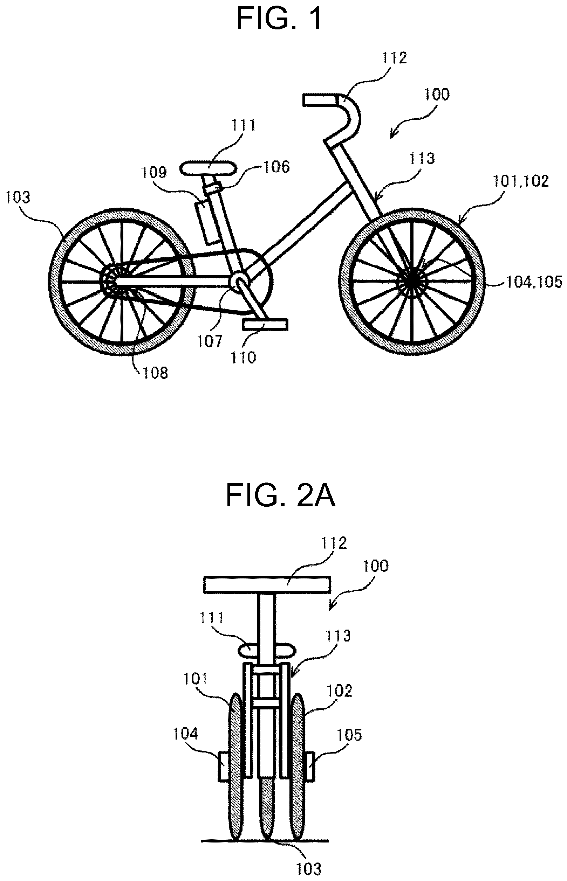

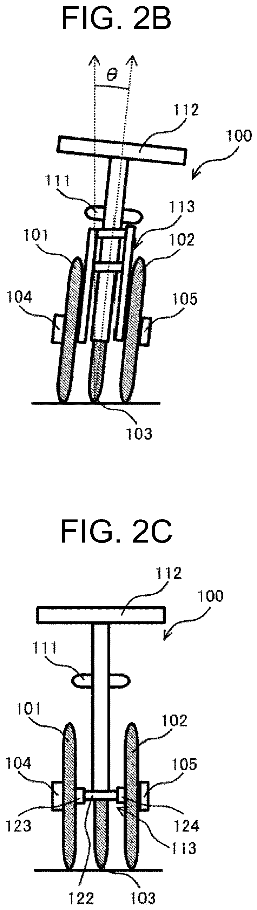

FIG. 1, FIG. 2A, and FIG. 2B illustrate a vehicle 100 as one embodiment of the present invention. A vehicle herein is a vehicle in which at least one of a front wheel section and a rear wheel section is configured from a left/right pair of wheels and which can be propelled by rotating a wheel in at least one of the front wheel section and the rear wheel section by an activating force of a driver of the vehicle. As such a vehicle, for example, there is a cycle that can be propelled by rotating a wheel by an effort, as the activating force, provided to pedals by the driver. In the following embodiments, a description will be made particularly about a cycle among vehicles, but the present invention may be employed for vehicles which can be propelled by the activating force of the driver other than a cycle. The vehicle 100 is a front two-wheeled type tricycle in which a front wheel section of the front wheel section and a rear wheel section is configured from a left/right pair of wheels and includes the left/right pair of wheels that are arranged in the front wheel section and have a first wheel 101 positioned on the right side when seen from the driver and a second wheel 102 positioned on the left side when seen from the driver and a third wheel 103 arranged in the rear wheel section. In this case, one or more wheels may be included in the rear wheel section.

The vehicle 100 includes a battery 109 and a pair of motors configured from a first motor 104 that is arranged on a hub of the first wheel 101 and for controlling the rotational force of the first wheel 101 and a second motor 105 that is arranged on a hub of the second wheel 102 and for controlling the rotational force of the second wheel 102. The pair of motors 104 and 105 are connected with the battery 109. Note that the vehicle 100 of FIG. 1, FIG. 2A, and FIG. 2B is a front two-wheeled type tricycle with three wheels whose front wheel section is configured from the left/right pair of wheels but may be a rear two-wheeled type vehicle whose rear wheel section is configured from a left/right pair of wheels. Among rear two-wheeled type vehicles, for example, in a case of a rear two-wheeled type cycle, a rotation difference may be provided to left and right wheels by employing differential gears in the rear wheels, and further a motor is arranged on a hub of each of the left and right wheels.

The vehicle 100 includes a suspension mechanism 113, and the first wheel 101 and the second wheel 102 are attached to the vehicle 100 via the suspension mechanism 113. The suspension mechanism 113 of the vehicle 100 of FIG. 2A and FIG. 2B is a link mechanism. As illustrated in FIG. 2A, the suspension mechanism 113 is in a substantially rectangular shape in a case where the vehicle 100 is not inclined with respect to the perpendicular direction. However, as illustrated in FIG. 2B, the suspension mechanism 113 is immediately inclined into a substantially parallelogram shape in accordance with the angle of inclination in a case where the vehicle 100 is inclined with respect to the perpendicular direction. The suspension mechanism 113 is inclined, and the first wheel 101 and the second wheel 102 attached to the vehicle 100 via the suspension mechanism 113 can be inclined with respect to the vehicle 100 at the same angle as the inclination of the suspension mechanism 113, that is, the inclination of the vehicle 100 with respect to the perpendicular direction. That is, the respective positions of the first wheel 101 and the second wheel 102 with respect to the height direction of the vehicle 100 can be differentiated so as to conform with the inclination of the vehicle 100 with respect to the perpendicular direction. Thus, even in a case where the vehicle 100 is inclined with respect to the perpendicular direction, the first wheel 101 and the second wheel 102 can be grounded to a road surface, and the position of the vehicle 100 is stabilized with high mechanical conformity. Note that even in a case where the road surface on which the vehicle 100 is traveling is inclined or a case where a bump is present, the suspension mechanism 113 is immediately inclined into a substantially parallelogram shape similarly, and the first wheel 101 and the second wheel 102 can be inclined with respect to the vehicle 100 at the same angle as the inclination of the suspension mechanism 113. Thus, even in a case where the road surface on which the vehicle 100 is traveling is inclined or a case where a bump is present, the first wheel 101 and the second wheel 102 can be grounded to the road surface, and the position of the vehicle 100 is stabilized with high mechanical conformity.

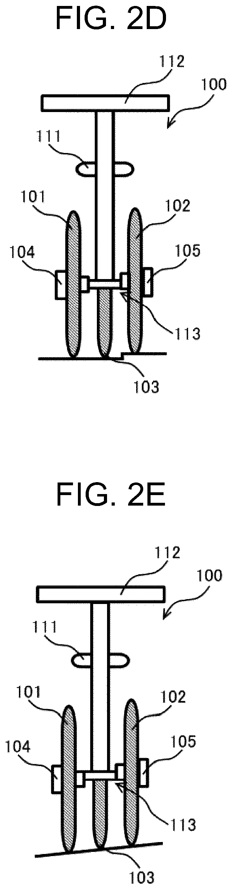

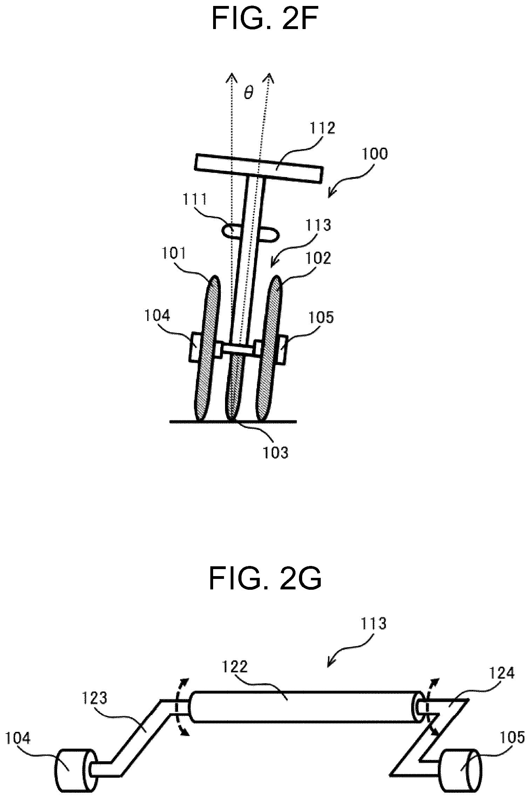

FIG. 2C to FIG. 2F illustrate the vehicle 100 as another embodiment of the present invention, and the relationship between the suspension mechanism 113 and the first motor 104 and second motor 105 of the vehicle 100 as the other embodiment is illustrated in FIG. 2G. The vehicle 100 as the other embodiment of the present invention in FIG. 2C to FIG. 2F is different only in the suspension mechanism 113 compared to the vehicle 100 as the one embodiment of the present invention in FIG. 2A and FIG. 2B. As illustrated in FIG. 2G, the suspension mechanism 113 includes a suspension shaft 122, the first motor 104 arranged on the hub of the first wheel 101, the second motor 105 arranged on the hub of the second wheel 102, a first arm 123 for connecting the suspension shaft 122 and the first motor 104 together, and a second arm 124 for connecting the suspension shaft 122 and the second motor 105 together. The first arm 123 and the second arm 124 are attached to the suspension shaft 122 so as to be, independently of one another, rotatable with respect to the suspension shaft 122 as indicated by the arrows. The first motor 104 and the second motor 105 operate, independently of one another, with respect to the height direction of the vehicle 100 by rotations of the first arm 123 and the second arm 124, and in accordance with that, the first wheel 101 and the second wheel 102 also operate, independently of one another, with respect to the height direction of the vehicle 100. As illustrated in FIG. 2C, in a case where the vehicle 100 travels on a horizontal road surface, the first arm 123 and the second arm 124 are parallel with each other. However, as illustrated in FIG. 2D, in a case where the vehicle 100 travels on a road surface on which a bump is present, one arm (the second arm 124 in FIG. 2D) immediately rotates, and the motor and wheel connected with the arm (the second motor 105 and the second wheel 102 in FIG. 2D) can operate upward. Thus, the first wheel 101 and the second wheel 102 are together grounded to the road surface, and the position of the vehicle 100 is stabilized with high mechanical conformity. As illustrated in FIG. 2E, in a case where the vehicle 100 travels on an inclined road surface, the first arm 123 and the second arm 124 immediately and respectively rotate to opposite directions, and the motors and wheels connected with the respective arms can operate upward and downward (in FIG. 2E, the first motor 104 and the first wheel 101 operate downward, and the second motor 105 and the second wheel 102 operate upward). Thus, the first wheel 101 and the second wheel 102 are together grounded to the road surface, and the position of the vehicle 100 is stabilized with high mechanical conformity. As illustrated in FIG. 2F, in a case where the vehicle 100 is inclined with respect to the perpendicular direction, the first arm 123 and the second arm 124 immediately and respectively rotate to opposite directions, and the motors and wheels connected with the respective arms can operate upward and downward (in FIG. 2F, the first motor 104 and the first wheel 101 operate downward, and the second motor 105 and the second wheel 102 operate upward). Thus, the first wheel 101 and the second wheel 102 are together grounded to the road surface, and the position of the vehicle 100 is stabilized with high mechanical conformity.

Further, the suspension mechanism 113 as in FIG. 2C to FIG. 2G is employed for the link mechanism as the suspension mechanism 113 in FIG. 2A and FIG. 2B, the first arm 123 and the second arm 124 are connected with the link mechanism, and the first motor 104 and the second motor 105 may respectively be connected with the link mechanism via the first arm 123 and the second arm 124. The first arm 123 and the second arm 124 are attached to the link mechanism so as to be, independently of one another, rotatable with respect to the link mechanism, the first motor 104 and the second motor 105 operate, independently of one another, with respect to the height direction of the vehicle 100 by rotations of the first arm 123 and the second arm 124, and in accordance with that, the first wheel 101 and the second wheel 102 can thereby also operate, independently of one another, with respect to the height direction of the vehicle 100.

Further, the vehicle 100 includes a sensor group that detect conditions of the vehicle 100 and transmit condition signals based on the detection. As illustrated in FIG. 1, as the conditions of the vehicle 100 may include the inclination of the vehicle 100 with respect to the perpendicular direction, the activating force of the driver of the vehicle 100, and the velocity of the vehicle 100, for example, and those are respectively detected by an inclination sensor 106, an activating force sensor 107, a velocity sensor 108, and the like.

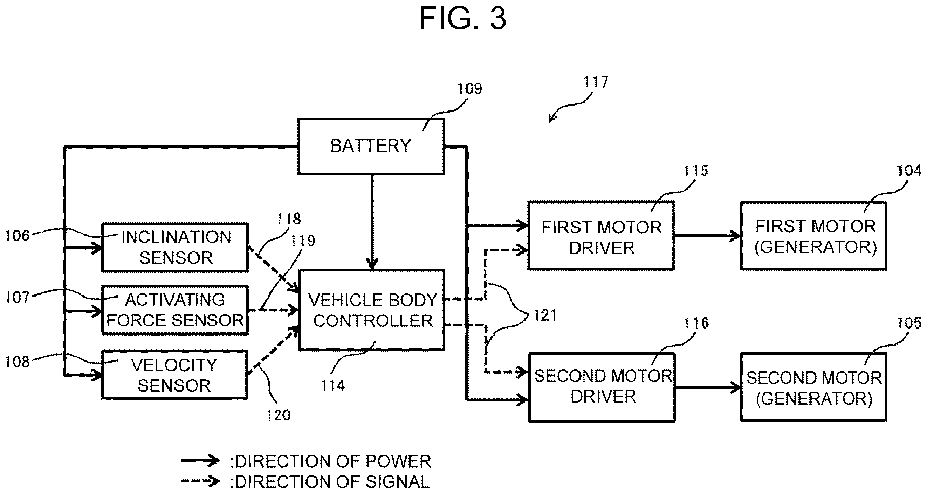

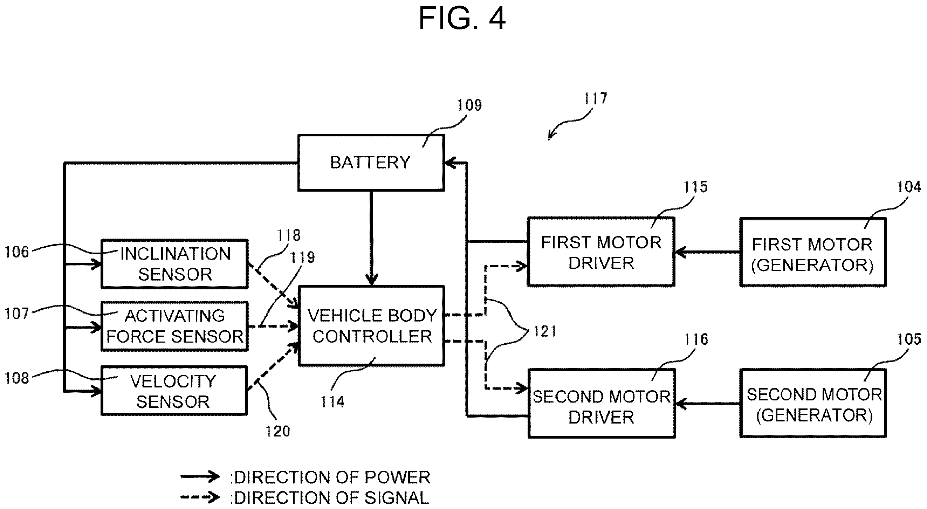

FIG. 3 and FIG. 4 illustrate a control device 117 that is used for the vehicle 100 in which at least one of the front wheel section and the rear wheel section is configured from a left/right pair of wheels which have a right wheel as the first wheel 101 and a left wheel as the second wheel 102. The control device 117 includes the battery 109, the pair of motors that are connected with the battery 109 and configured from the first motor 104 which controls the rotational force of the right wheel as the first wheel 101 and the second motor 105 which controls the rotational force of the left wheel as the second wheel 102, the sensor group that includes the inclination sensor 106, the activating force sensor 107, and the velocity sensor 108, detects the conditions of the vehicle 100, and transmits condition signals based on the detection (inclination signal 118, activating force signal 119, and velocity signal 120), a vehicle body controller 114 that receives the condition signals 118 to 120, performs arithmetic processing, and transmits a control signal 121 for controlling outputs of the first motor 104 and the second motor 105, and a first motor driver 115 that controls power supply between the battery 109 and the first motor 104 and a second motor driver 116 that controls power supply between the battery 109 and the second motor 105 based on the control signal 121 transmitted from the vehicle body controller 114. In such a manner, the first motor driver 115 and the second motor driver 116 that receive the control signal 121 respectively supply power from the battery 109 to the first motor 104 and the second motor 105 at a certain timing, supply power from the first motor 104 and the second motor 105 to the battery 109 at a certain timing, and can control the output of the first motor 104 and the output of the second motor 105 independently of one another.

Note that the first motor driver 115 and the second motor driver 116 may be an integrated motor driver. In addition, the vehicle body controller 114, the first motor driver 115, and the second motor driver 116 may be an integrated controller. Further, the vehicle body controller 114, the first motor driver 115, and the second motor driver 116 may be arranged on a handle 112 as a section gripped by the driver of the vehicle 100 or may be arranged below a saddle 111 in a case where the vehicle 100 is a cycle. In FIG. 3 and FIG. 4, the control signal 121 is transmitted from the vehicle body controller 114 to each of the first motor driver 115 and the second motor driver 116 by one signal line. However, the control signal 121 is caused to have respective authentication codes for the first motor driver 115 and the second motor driver 116, and transmission may thereby be performed by a single signal line and may further be performed in a wired manner or a wireless manner.

The inclination sensor 106 of the sensor group is activated by power from the battery 109 and detects the inclination of the vehicle 100 with respect to the perpendicular direction (the height direction of the vehicle 100). Inclusion of the inclination sensor 106 enables detection of unsteadiness in which the vehicle 100 is inclined alternately to the left and right due to turning of the vehicle, a change in a road surface, and the like. As the inclination sensor 106, for example, an inclination angle sensor and a gyro sensor are present. As illustrated in FIG. 1, in a case where the vehicle 100 is a cycle, the inclination sensor, the gyro sensor, or the like may be arranged below the saddle 111. As illustrated in FIG. 2B, in a case where the vehicle 100 is inclined to the left with respect to the perpendicular direction when seen from the driver, an inclination angle θ is detected by the inclination sensor, or an angular velocity with respect to the inclination angle θ is detected by the gyro sensor, and the inclination of the vehicle 100 is thereby detected. Further, as the inclination sensor 106, for example, a torque sensor is present. The torque sensor is arranged on each of the first wheel 101 and the second wheel 102, and the inclination of the vehicle 100 can be detected by using the difference between the respective torques of the wheels detected by the torque sensors. Further, as the inclination sensor 106, for example, a steering angle sensor is present. The steering angle sensor is arranged on the handle 112 as the section gripped by the driver, and the inclination of the vehicle 100 can be detected by using the steering angle detected by the steering angle sensor. Note that the inclination sensor 106 can detect the inclination of the vehicle 100 with respect to the perpendicular direction even in a case where a road surface on which the vehicle 100 is traveling is a horizontal road surface as FIG. 1, FIG. 2A, and FIG. 2B and is an inclined road surface such as an upward slope or a downward slope.

The inclination sensor 106 generates the condition signal including the detected inclination (inclination signal 118) and transmits the condition signal to the vehicle body controller 114. The vehicle body controller 114 receives the condition signal (inclination signal 118), determines the direction of the inclination of the vehicle 100, and performs arithmetic processing of the condition signal (inclination signal 118) so as to correct the inclination of the vehicle 100 and return the position to the perpendicular direction. The first motor driver 115 and the second motor driver 116 respectively control power supply between the battery 109 and the first motor 104 and second motor 105 based on the control signal 121 transmitted from the vehicle body controller 114. Power supply between the battery 109 and the first motor 104 and second motor 105 is controlled by the first motor driver 115 and the second motor driver 116 based on the control signal 121 transmitted from the vehicle body controller 114, and the output of the first motor 104 and the output of the second motor 105 can thereby be controlled independently of one another. The output of the first motor 104 and the output of the second motor 105, which are controlled independently of one another, respectively control the rotational force of the first wheel 101 and the rotational force of the second wheel 102 independently of one another, thereby correcting the inclination of the vehicle 100 and returning the position to the perpendicular direction. In this case, the first motor 104 and the second motor 105 can increase the rotational force of the wheel of the pair of wheels which is positioned on the same side as the inclination or can decrease the rotational force of the wheel which is positioned on the opposite side to the inclination.

The activating force sensor 107 of the sensor group is activated by power from the battery 109 and detects the activating force by the driver of the vehicle 100 for propelling the vehicle 100. In a case where the vehicle 100 is a cycle, as the activating force sensor 107, a torque sensor is present. As illustrated in FIG. 1, the torque sensor is arranged on a shaft that connects a left/right pair of pedals 110 together, detects the torque of the shaft that is rotated by the pedals 110 pushed by the driver of the vehicle 100, and thereby detects a pedaling effort as the activating force by the driver. Note that the activating force sensor 107 may be any sensor as long as the sensor can detect the activating force exerted by the driver of the vehicle 100.

The activating force sensor 107 generates the condition signal including the detected activating force (activating force signal 119) and transmits the condition signal to the vehicle body controller 114. The vehicle body controller 114 receives the condition signals (inclination signal 118 and activating force signal 119) and performs arithmetic processing of the condition signals (inclination signal 118 and activating force signal 119) so as to correct the inclination of the vehicle 100 and return the position to the perpendicular direction. The first motor driver 115 and the second motor driver 116 respectively control power supply between the battery 109 and the first motor 104 and second motor 105 based on the control signal 121 transmitted from the vehicle body controller 114 and supply power from the battery 109 to the first motor 104 and the second motor 105 or supply power from the first motor 104 and the second motor 105 to the battery 109. The outputs of the first motor 104 and second motor 105 whose power supply is controlled are controlled independently of one another similarly to the above, and the rotational force of the first wheel 101 and the rotational force of the second wheel 102 are controlled independently of one another, thereby correcting the inclination of the vehicle 100 and returning the position to the perpendicular direction.

The velocity sensor 108 of the sensor group is activated by power from the battery 109, is arranged on the third wheel 103 as the rear wheel as illustrated in FIG. 1, and detects the velocity of the vehicle 100 from the rotational velocity of the third wheel 103. Note that the velocity sensor 108 may be any sensor as long as the sensor can detect the velocity of the vehicle 100. Further, the velocity sensor 108 may be arranged on either one of the first wheel 101 and the second wheel 102.

The velocity sensor 108 generates the condition signal including the detected velocity (velocity signal 120) and transmits the condition signal to the vehicle body controller 114. The vehicle body controller 114 receives the condition signals (inclination signal 118, activating force signal 119, and velocity signal 120) and performs arithmetic processing of the condition signals (inclination signal 118, activating force signal 119, and velocity signal 120) so as to correct the inclination and return the position to the perpendicular direction. The first motor driver 115 and the second motor driver 116 respectively control power supply between the battery 109 and the first motor 104 and second motor 105 based on the control signal 121 transmitted from the vehicle body controller 114 and supply power from the battery 109 to the first motor 104 and the second motor 105 or supply power from the first motor 104 and the second motor 105 to the battery 109. The outputs of the first motor 104 and second motor 105 whose power supply is controlled are controlled independently of one another similarly to the above, and the rotational force of the first wheel 101 and the rotational force of the second wheel 102 are controlled independently of one another, thereby correcting the inclination of the vehicle 100 and returning the position to the perpendicular direction.

Specifically describing this, in a case where the vehicle 100 becomes unsteady and an inclination is detected by the inclination sensor 106, the vehicle body controller 114 performs arithmetic processing of the condition signal based on the inclination (inclination signal 118) so as to be capable of controlling at least one of the first motor 104 and the second motor 105. The first motor driver 115 and the second motor driver 116 respectively control power supply between the battery 109 and the first motor 104 and second motor 105 based on the control signal 121 transmitted from the vehicle body controller 114 and supply power from the battery 109 to the first motor 104 and the second motor 105 or supply power from the first motor 104 and the second motor 105 to the battery 109, thereby correcting the inclination and returning the position to the perpendicular direction. Note that the first motor 104 and the second motor 105 respectively control the torque amounts necessary for the first wheel 101 and the second wheel 102 and times in which torques are exerted and can thereby provide rotational torques to the first wheel 101 and the second wheel 102 independently of one another. "Providing a forward rotational torque" of "providing a rotational torque" represents increasing the rotational force of the wheel by providing a torque in the same direction with respect to the rotation of the wheel in an advancing direction of the vehicle 100, and "providing a reverse rotational torque" represents decreasing the rotational force of the wheel by providing a torque in the reverse direction with respect to the rotation of the wheel in the advancing direction of the vehicle 100. Even when the rotational velocity of the wheel is zero, the motor can provide a rotational torque to the wheel.

Specifically, in a case where the vehicle 100 is inclined to the left when seen from the driver as illustrated in FIG. 2B (an inclination angle θ in the case of FIG. 2B), the inclination sensor 106 detects that the vehicle 100 is inclined to the left and transmits the condition signal (inclination signal 118) based on the detection (the inclination to the left), and the vehicle body controller 114 performs arithmetic processing of the condition signal (inclination signal 118) based on the inclination to the left; the second motor driver 116 supplies power from the battery 109 to the second motor 105 based on the control signal 121 transmitted from the vehicle body controller 114, and the second motor 105 provides a forward rotational torque to the second wheel 102 on the left side to increase the rotational force of the second wheel 102; or the first motor driver 115 supplies power from the battery 109 to the first motor 104 based on the control signal 121 transmitted from the vehicle body controller 114, and the first motor 104 provides a reverse rotational torque to the first wheel 101 on the right side to decrease the rotational force of the first wheel 101; and the rotational forces of the first wheel 101 and the second wheel 102 are controlled independently of one another; thereby correcting the inclination to the left and returning the position to the perpendicular direction (an inclination angle of zero in the case of FIG. 2A). Note that in a case where the reverse rotational torque is provided to the first wheel 101 to decrease the rotational force, the first motor 104 is activated as a generator by the first motor driver 115 to cause the first wheel 101 to perform regenerative braking, and power can thereby be supplied from the first motor 104 to the battery 109. Further, in a case where the vehicle 100 is inclined to the right when seen from the driver, the inclination sensor 106 detects that the vehicle 100 is inclined to the right and transmits the condition signal (inclination signal 118) based on the detection (the inclination to the right), and the vehicle body controller 114 performs arithmetic processing of the condition signal (inclination signal 118) based on the inclination to the right; the first motor driver 115 supplies power from the battery 109 to the first motor 104 based on the control signal 121 transmitted from the vehicle body controller 114, and the first motor 104 provides a forward rotational torque to the first wheel 101 on the right side to increase the rotational force of the first wheel; or the second motor driver 116 supplies power from the battery 109 to the second motor 105 based on the control signal 121 transmitted from the vehicle body controller 114, and the second motor 105 provides a reverse rotational torque to the second wheel 102 on the left side to decrease the rotational force of the second wheel 102; and the rotational forces of the first wheel 101 and the second wheel 102 are controlled independently of one another; thereby correcting the inclination to the right and returning the position to the perpendicular direction. Note that in a case where the reverse rotational torque is provided to the second wheel 102 to decrease the rotational force, the second motor 105 is activated as a generator by the second motor driver 116 to cause the second wheel 102 to perform regenerative braking, and power can thereby be supplied from the second motor 105 to the battery 109.

In a case where a reverse rotational torque is provided to the wheel and where the rotational force of the wheel has to be largely decreased in a short time, the motor may be activated as an electric motor. For example, in inclination correction of the vehicle 100 in a case where the vehicle 100 is inclined to the left, in a case where the inclination correction of the vehicle 100 is not adequately made even if the first motor 104 is activated as the generator and causes the first wheel 101 to perform regenerative braking, the first motor 104 is activated as the electric motor to enable the first motor 104 to provide a large reverse rotational torque to the first wheel 101, and the rotational force of the first wheel 101 may thereby be decreased largely. In such a manner, in a case where a reverse rotational torque is provided to the wheel, necessary and optimal methods for activating the motor may be selected, such as activating the motor as the generator or the electric motor and activating the motor as the electric motor after activating it as the generator.

In a case where the vehicle 100 is an electrically-assisted cycle, because the range in which assistance can be performed may be designated by law or the like in accordance with the velocity of the vehicle 100, a method for controlling the first motor 104 and the second motor 105 may differ in accordance with the velocity of the vehicle 100. In a case where the velocity of the vehicle 100 detected by the velocity sensor 108 is a prescribed velocity (for example, 24 km/h) or higher, assistance may not be performed. Thus, in order to decrease the rotational force of the wheel positioned on the opposite side to the inclination detected by the inclination sensor 106, the motor of the wheel provides a reverse rotational torque to the wheel, and the inclination is thereby corrected.

Specifically, in a case where the velocity of the vehicle 100 is the prescribed velocity or higher and where the vehicle 100 is inclined to the right, the inclination sensor 106 and the velocity sensor 108 detect that the vehicle 100 is inclined to the right and that the vehicle 100 is at the prescribed velocity or higher and transmit the condition signals (inclination signal 118 and velocity signal 120) based on the detection, the vehicle body controller 114 performs arithmetic processing of the condition signal (inclination signal 118) based on the inclination to the right and of the condition signal (velocity signal 120) based on the velocity, the second motor driver 116 supplies power from the battery 109 to the second motor 105 based on the control signal 121 transmitted from the vehicle body controller 114, and the second motor 105 provides a reverse rotational torque to the second wheel 102 on the left side to decrease the rotational force of the second wheel 102, thereby correcting the inclination to the right and returning the position to the perpendicular direction. In this case, the inclination to the right may be corrected such that the first motor 104 and the second motor 105 together provide reverse rotational torques to the first wheel 101 and the second wheel 102, respectively, but the reverse rotational torque of the second motor 105 is made larger than the reverse rotational torque of the first motor 104. Further, in a case where the vehicle 100 is inclined to the left, the inclination sensor 106 and the velocity sensor 108 detect that the vehicle 100 is inclined to the left and that the vehicle 100 is at the prescribed velocity or higher and transmit the condition signals (inclination signal 118 and velocity signal 120) based on the detection, the vehicle body controller 114 performs arithmetic processing of the condition signal (inclination signal 118) based on the inclination to the left and of the condition signal (velocity signal 120) based on the velocity, the first motor driver 115 supplies power from the battery 109 to the first motor 104 based on the control signal 121 transmitted from the vehicle body controller 114, and the first motor 104 provides a reverse rotational torque to the first wheel 101 on the right side to decrease the rotational force of the first wheel 101, thereby correcting the inclination to the left and returning the position to the perpendicular direction. In this case, the inclination to the left may be corrected such that the first motor 104 and the second motor 105 together provide reverse rotational torques to the first wheel 101 and the second wheel 102, respectively, but the reverse rotational torque of the first motor 104 is made larger than the reverse rotational torque of the second motor 105.

Further, in a case where the inclination sensor 106 and the velocity sensor 108 detect that the vehicle 100 is inclined in the front-rear direction with respect to the perpendicular direction and that the velocity of the vehicle 100 is decreased or increased such as a case where the vehicle 100 ascends on an upward slope or descends on a downward slope, the inclination sensor 106 and the velocity sensor 108 transmit the condition signals (inclination signal 118 and velocity signal 120) based on the detection, the vehicle body controller 114 performs arithmetic processing of the condition signal (inclination signal 118) based on the inclination in the front-rear direction and of the condition signal (velocity signal 120) based on the increasing or decreasing velocity, and the first motor driver 115 and the second motor driver 116 respectively control power supply between the battery 109 and the first motor 104 and second motor 105 based on the control signal 121 transmitted from the vehicle body controller 114. In a case where the velocity of the vehicle 100 decreases, the first motor 104 and the second motor 105 respectively provide forward rotational torques to the first wheel 101 and the second wheel 102, increase the rotational forces, and can thereby increase the velocity of the vehicle 100. Further, in a case where the velocity of the vehicle 100 increases, the first motor 104 and the second motor 105 respectively provide reverse rotational torques to the first wheel 101 and the second wheel 102, decrease the rotational force of the wheel 102, and can thereby decrease the velocity of the vehicle 100.

Usually, the first motor 104 and the second motor 105 are respectively activated as electric motors so as to be capable of converting electric energy (power) supplied from the battery 109 into kinetic energy (travel energy of the vehicle 100) and thereby control the first wheel 101 and the second wheel 102. However, each of the first motor 104 and the second motor 105 may be activated as a generator. The first motor 104 and second motor 105 activated as the generators respectively cause the first wheel 101 and the second wheel 102 to perform regenerative braking, thereby provide reverse rotational torques to the first wheel 101 and the second wheel 102 to decrease the rotational forces, and can further convert the kinetic energy (the travel energy of the vehicle 100) into electric energy (power) to recover the electric energy to the battery 109. For example, in a case where it is determined that the inclination direction is right and the velocity of the vehicle 100 is a prescribed value or greater, the second motor driver 116 activates the second motor 105 as the generator based on the control signal 121 transmitted from the vehicle body controller 114, the second motor 105 causes the second wheel 102 on the left side to perform regenerative braking, thereby provide a reverse rotational torque to the second wheel 102 to decrease the rotational force of the second wheel 102, further converts the travel energy of the vehicle 100 into power, and may thereby recover the travel energy of the vehicle 100 such that a current flows from the second motor 105 to the battery 109 and power is returned (supplied) from the second motor 105 to the battery 109.

In a case where the vehicle 100 is an electrically-assisted cycle, because assistance can be performed when the driver of the vehicle 100 exerts the pedaling force as the activating force, a method for controlling the first motor 104 and the second motor 105 may differ in accordance with the activating force. In a case where the velocity of the vehicle 100 detected by the velocity sensor 108 is lower than a prescribed velocity and where the activating force is detected by the activating force sensor 107, assistance can be performed. Thus, the rotational force of the wheel positioned on the same side as the inclination detected by the inclination sensor 106 is controlled, the motor of the wheel provides a forward rotational torque to the wheel, and the inclination is thereby corrected.

Specifically, in a case where the velocity of the vehicle 100 is lower than the prescribed velocity and the activating force is detected and where the vehicle 100 is inclined to the right, the inclination sensor 106, the activating force sensor 107, and the velocity sensor 108 detect that the vehicle 100 is inclined to the right, that the activating force by the driver is present, and that the vehicle 100 is at a lower velocity than the prescribed velocity and transmit the condition signals (inclination signal 118, activating force signal 119, and velocity signal 120) based on the detection, the vehicle body controller 114 performs arithmetic processing of the condition signal (inclination signal 118) based on the inclination to the right, of the condition signal (activating force signal 119) based on the activating force, and of the condition signal (velocity signal 120) based on the velocity, the first motor driver 115 controls power supply between the battery 109 and the first motor 104 based on the control signal 121 transmitted from the vehicle body controller 114, and the first motor 104 provides a forward rotational torque to the first wheel 101 on the right side to increase the rotational force of the first wheel 101, thereby correcting the inclination to the right and returning the position to the perpendicular direction. In this case, the inclination to the right may be corrected such that the first motor 104 and the second motor 105 together provide forward rotational torques to the first wheel 101 and the second wheel 102, respectively, but the forward rotational torque of the first motor 104 is made larger than the forward rotational torque of the second motor 105. Further, in a case where the vehicle 100 is inclined to the left, the inclination sensor 106, the activating force sensor 107, and the velocity sensor 108 detect that the vehicle 100 is inclined to the left, that the activating force by the driver is present, and that the vehicle 100 is at a lower velocity than the prescribed velocity and transmit the condition signals (inclination signal 118, activating force signal 119, and velocity signal 120) based on the detection, the vehicle body controller 114 performs arithmetic processing of the condition signal (inclination signal 118) based on the inclination to the left, of the condition signal (activating force signal 119) based on the activating force, and of the condition signal (velocity signal 120) based on the velocity, the second motor driver 116 controls power supply between the battery 109 and the second motor 105 based on the control signal 121 transmitted from the vehicle body controller 114, and the second motor 105 provides a forward rotational torque to the second wheel 102 on the left side to increase the rotational force of the second wheel 102, thereby correcting the inclination to the left and returning the position to the perpendicular direction. In this case, the inclination to the left may be corrected such that the first motor 104 and the second motor 105 together provide forward rotational torques to the first wheel 101 and the second wheel 102, respectively, but the forward rotational torque of the second motor 105 is made larger than the forward rotational torque of the first motor 104.

Note that in this case, power is supplied from the battery 109 to the motor that provides the forward rotational torque. For example, in a case where the inclination direction is right, the velocity of the vehicle 100 is lower than a prescribed value, and the activating force is present, in order to increase the rotational force of the first wheel 101 on the right side, the first motor driver 115 causes a current to flow from the battery 109 to the motor that increases the rotational force of the first wheel 101, that is, the first motor 104 based on the control signal 121 transmitted from the vehicle body controller 114, power is supplied from the battery 109 to the first motor 104, and the first motor 104 provides a forward rotational torque to the first wheel 101.

In a case where the velocity of the vehicle 100 detected by the velocity sensor 108 is lower than the prescribed velocity and where the activating force is not detected by the activating force sensor 107, assistance may not be performed. Thus, the motor, which controls the rotational force of the wheel positioned on the opposite side to the inclination detected by the inclination sensor 106, provides a reverse rotational torque to the wheel and thereby corrects the inclination. A specific method for correcting an inclination is similar to the above method in a case where the velocity of the vehicle 100 is the prescribed velocity or higher.

Note that in this case, the motor that provides the reverse rotational torque to the wheel is activated as the generator and causes the wheel to perform regenerative braking, the travel energy of the vehicle 100 is thereby recovered by the motor, and power may be returned (supplied) to the battery 109. For example, in a case where it is determined that the inclination direction is right, the velocity of the vehicle 100 is lower than a prescribed value, and the activating force is not present, the second motor driver 116 activates the motor that decreases the rotational force of the second wheel 102 on the left side, that is, the second motor 105 as the generator and causes the second wheel 102 to perform regenerative braking based on the control signal 121 transmitted from the vehicle body controller 114, the travel energy of the vehicle 100 is thereby recovered, a current flows from the second motor 105 to the battery 109, power is returned (supplied) from the second motor 105 to the battery 109, and further the second motor 105 activated as the generator may provide a reverse rotational torque to the second wheel 102.

Further, in a case where an inclination is not detected by the inclination sensor 106 and the vehicle 100 is not unsteady and where the velocity of the vehicle 100 detected by the velocity sensor 108 is lower than the prescribed velocity and the activating force is detected by the activating force sensor 107, assistance can be performed. Thus, the vehicle body controller 114 performs arithmetic processing of the condition signals (inclination signal 118, activating force signal 119, and velocity signal 120), the first motor driver 115 and the second motor driver 116 respectively control power supplied from the battery 109 based on the control signal 121 transmitted from the vehicle body controller 114, supply power to the first motor 104 and the second motor 105, and control the output of the first motor 104 and the output of the second motor 105 independently of one another, and the first motor 104 and the second motor 105 respectively provide forward rotational torques to the first wheel 101 and the second wheel 102 to increase the rotational forces of the first wheel 101 and the second wheel 102.

The position of the vehicle 100 is likely to become unsteady also when the driver starts driving of the vehicle 100. Accordingly, when the driving of the vehicle 100 is started by the driver, the first motor 104 and the second motor 105 respectively provide slight rotational torques to the first wheel 101 and the second wheel 102, and the position of the vehicle 100 may thereby be stabilized. In this case, the activating force sensor 107 and the velocity sensor 108 are used to determine whether or not the driving of the vehicle 100 is started. In a case where an inclination is detected by the inclination sensor 106, the first motor 104 and the second motor 105 may respectively provide slight rotational torques to the first wheel 101 and the second wheel 102 in accordance with the detection.

Specifically, in a case where the vehicle 100 stands still and the driver does not exert the activating force and where the vehicle 100 is inclined to the right, the inclination sensor 106, the activating force sensor 107, and the velocity sensor 108 detect that the vehicle 100 is inclined to the right, that the activating force by the driver is not present, and that the vehicle 100 stands still and transmit the condition signals (inclination signal 118, activating force signal 119, and velocity signal 120) based on the detection, the vehicle body controller 114 performs arithmetic processing of the condition signal (inclination signal 118) based on the inclination to the right, of the condition signal (activating force signal 119) based on the activating force, and of the condition signal (velocity signal 120) based on the velocity and thereby determines that the driving of the vehicle 100 is started, and the first motor driver 115 and the second motor driver 116 respectively control power supplied from the battery 109 based on the control signal 121 transmitted from the vehicle body controller 114 and supply power to the first motor 104 and the second motor 105. Then, the first motor 104 that controls the rotational force of the first wheel 101 on the right side provides a slight forward rotational torque to the first wheel 101 and causes the first wheel 101 to slightly rotate with respect to the same direction as the advancing direction of the vehicle 100, and the second motor 105 that controls the rotational force of the second wheel 102 on the left side provides a slight reverse rotational torque to the second wheel 102 and causes the second wheel 102 to slightly rotate with respect to the opposite direction to the advancing direction of the vehicle 100, thereby correcting the inclination to the right and returning the position to the perpendicular direction. In this case, control may be performed either by the first motor 104 providing the slight forward rotational torque to the first wheel 101 or by the second motor 105 providing the slight reverse rotational torque to the second wheel 102. Further, in a case where the vehicle 100 is inclined to the left, the inclination sensor 106, the activating force sensor 107, and the velocity sensor 108 detect that the vehicle 100 is inclined to the left, that the activating force by the driver is not present, and that the vehicle 100 stands still and transmit the condition signals (inclination signal 118, activating force signal 119, and velocity signal 120) based on the detection, the vehicle body controller 114 performs arithmetic processing of the condition signal (inclination signal 118) based on the inclination to the left, of the condition signal (activating force signal 119) based on the activating force, and of the condition signal (velocity signal 120) based on the velocity and thereby determines that the driving of the vehicle 100 is started, and the first motor driver 115 and the second motor driver 116 respectively control power supplied from the battery 109 based on the control signal 121 transmitted from the vehicle body controller 114 and supply power to the first motor 104 and the second motor 105. Then, the second motor 105 that controls the rotational force of the second wheel 102 on the left side provides a slight forward rotational torque to the second wheel 102 and causes the second wheel 102 to slightly rotate with respect to the same direction as the advancing direction of the vehicle 100, and the first motor 104 that controls the rotational force of the first wheel 101 on the right side provides a slight reverse rotational torque to the first wheel 101 and causes the first wheel 101 to slightly rotate with respect to the opposite direction to the advancing direction of the vehicle 100, thereby correcting the inclination to the left and returning the position to the perpendicular direction. In this case, control may be performed either by the second motor 105 providing the slight forward rotational torque to the second wheel 102 or by the first motor 104 providing the slight reverse rotational torque to the first wheel 101. Note that in a case where the vehicle 100 is a cycle, a sensor such as a load cell is further placed below the saddle 111, a determination is made whether or not the driver rides on the vehicle 100, that is, whether or not the driving of the vehicle 100 is started based on detection of a load by the sensor such as the load cell. In a case where an inclination is detected by the inclination sensor 106, the first motor 104 and the second motor 105 may respectively provide the slight rotational torques to the first wheel 101 and the second wheel 102 as described above.

Next, a description will be made about a method for controlling the vehicle 100 in which at least one of the front wheel section and the rear wheel section is configured from a pair of wheels which have the right wheel as the first wheel 101 and the left wheel as the second wheel 102 and which can be propelled by the activating force of the driver. The method includes steps of detecting the conditions of the vehicle 100 and steps of controlling the rotational forces of the pair of wheels 101 and 102 independently of one another in response to the detection.

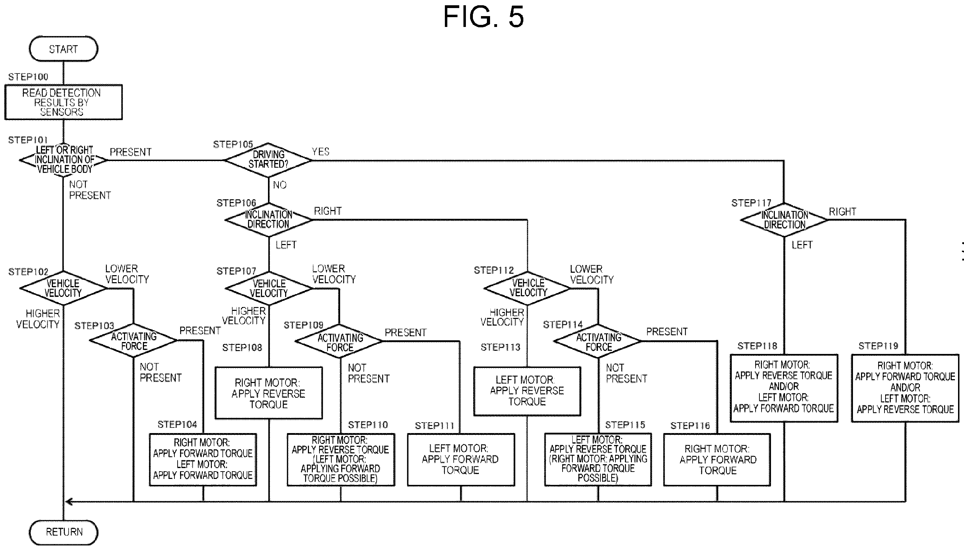

A detailed description will be made, by using the flowchart illustrated in FIG. 5, about a method for controlling the vehicle 100 that includes a pair of motors configured from the first motor 104 on the right side and the second motor 105 on the left side, which are respectively arranged on the pair of wheels. In STEP 100, detection results by the inclination sensor 106, the activating force sensor 107, and the velocity sensor 108, which are included in the vehicle 100, are read. Next, in STEP 101, a determination is made whether or not an inclination of the vehicle 100 is present based on the detection result by the inclination sensor 106. In a case where a determination is made that an inclination is not present, in STEP 102, a determination is made whether the velocity of the vehicle 100 is a higher velocity or a lower velocity than a prescribed velocity based on the detection result by the velocity sensor 108. In a case where a determination is made that the velocity is a lower velocity, in STEP 103, a determination is made whether or not the activating force by the driver is present based on the detection result by the activating force sensor 107. In a case where a determination is made that the activating force is present, in STEP 104, the right motor and the left motor respectively apply forward rotational torques to the right wheel and the left wheel.

In a case where a determination is made that an inclination is present in STEP 101, in STEP 105, a determination is made whether or not the driving of the vehicle 100 is started. Whether or not the driving of the vehicle 100 is started may be determined based on the detection results by the activating force sensor 107 and the velocity sensor 108.

In a case where a determination is made that the driving is not started in STEP 105, in STEP 106, the inclination direction of the vehicle 100 is determined. Note that although the vehicle 100 is inclined with respect to the perpendicular direction in both of left turn and right turn of the vehicle 100, in a case where a determination is made that the inclination is not due to unsteadiness but left turn or right turn, steps of STEPs 107 to 116 described in the following are set not to be performed.

In STEP 106, in a case where a determination is made that the inclination occurs to the left, the inclination to the left is corrected, and the position is returned to the perpendicular direction. However, control methods of the right motor and the left motor differ in accordance with the velocity of the vehicle 100 and the activating force. In STEP 107, a determination is made whether the velocity of the vehicle 100 is a higher velocity or a lower velocity than a prescribed velocity based on the detection result by the velocity sensor 108. In a case where a determination is made that the velocity is a higher velocity, in STEP 108, the right motor applies a reverse rotational torque to the right wheel to decrease the rotational force of the right wheel and thereby corrects the inclination to the left. In this case, the inclination to the left may be corrected such that the right motor and the left motor together apply reverse rotational torques to the right wheel and the left wheel, respectively, but the reverse rotational torque of the right motor is made larger than the reverse rotational torque of the left motor. Note that in a case where a reverse rotational torque is applied, the motor may be activated as a generator and cause the wheel to perform regenerative braking. In a case where a determination is made that the velocity is a lower velocity in STEP 107, in STEP 109, a determination is made whether or not the activating force by the driver is present based on the detection result by the activating force sensor 107. In a case where a determination is made that the activating force is not present, in STEP 110, the right motor applies a reverse rotational torque to the right wheel to decrease the rotational force of the right wheel and thereby corrects the inclination to the left. In this case, the inclination to the left may be corrected such that the right motor and the left motor together apply reverse rotational torques to the right wheel and the left wheel, respectively, but the reverse rotational torque of the right motor is made larger than the reverse rotational torque of the left motor. Note that in a case where a reverse rotational torque is applied, the motor may be activated as the generator and cause the wheel to perform regenerative braking. Further, the left motor may apply a slight forward rotational torque to the left wheel and slightly increase the rotational force of the left wheel. In a case where a determination is made that the activating force is present in STEP 109, in STEP 111, the left motor applies a forward rotational torque to the left wheel to increase the rotational force of the left wheel and thereby corrects the inclination to the left. In this case, the inclination to the left may be corrected such that the right motor and the left motor together apply forward rotational torques to the right wheel and the left wheel, respectively, but the forward rotational torque of the left motor is made larger than the forward rotational torque of the right motor.

In STEP 106, in a case where a determination is made that the inclination occurs to the right, the inclination to the right is corrected, and the position is returned to the perpendicular direction. However, control methods of the right motor and the left motor differ in accordance with the velocity of the vehicle 100 and the activating force. In STEP 112, a determination is made whether the velocity of the vehicle 100 is a higher velocity or a lower velocity than a prescribed velocity based on the detection result by the velocity sensor 108. In a case where a determination is made that the velocity is a higher velocity, in STEP 113, the left motor applies a reverse rotational torque to the left wheel to decrease the rotational force of the left wheel and thereby corrects the inclination to the right. In this case, the inclination to the right may be corrected such that the right motor and the left motor together apply reverse rotational torques to the right wheel and the left wheel, respectively, but the reverse rotational torque of the left motor is made larger than the reverse rotational torque of the right motor. Note that in a case where a reverse rotational torque is applied, the motor may be activated as the generator and cause the wheel to perform regenerative braking. In a case where a determination is made that the velocity is a lower velocity in STEP 112, in STEP 114, a determination is made whether or not the activating force by the driver is present based on the detection result by the activating force sensor 107. In a case where a determination is made that the activating force is not present, in STEP 115, the left motor applies a reverse rotational torque to the left wheel to decrease the rotational force of the left wheel and thereby corrects the inclination to the right. In this case, the inclination to the right may be corrected such that the right motor and the left motor together apply reverse rotational torques to the right wheel and the left wheel, respectively, but the reverse rotational torque of the left motor is made larger than the reverse rotational torque of the right motor. Note that in a case where a reverse rotational torque is applied, the motor may be activated as the generator and cause the wheel to perform regenerative braking. Further, the right motor may apply a slight forward rotational torque to the right wheel and slightly increase the rotational force of the right wheel. In a case where a determination is made that the activating force is present in STEP 114, in STEP 116, the right motor applies a forward rotational torque to the right wheel to increase the rotational force of the right wheel and thereby corrects the inclination to the right. In this case, the inclination to the right may be corrected such that the right motor and the left motor together apply forward rotational torques to the right wheel and the left wheel, respectively, but the forward rotational torque of the right motor is made larger than the forward rotational torque of the left motor.

In a case where a determination is made that the driving of the vehicle 100 is started in STEP 105, in STEP 117, the inclination direction of the vehicle 100 is determined. In a case where a determination is made that the inclination occurs to the left in STEP 117, in STEP 118, the right motor applies a slight reverse rotational torque to the right wheel to cause the right wheel to slightly rotate with respect to the opposite direction to the advancing direction of the vehicle 100, and/or the left motor applies a slight forward rotational torque to the left wheel to cause the left wheel to slightly rotate with respect to the same direction as the advancing direction of the vehicle 100, thereby correcting the inclination to the left and returning the position to the perpendicular direction. Further, in a case where a determination is made that the inclination occurs to the right in STEP 117, in STEP 119, the left motor applies a slight reverse rotational torque to the left wheel to cause the left wheel to slightly rotate with respect to the opposite direction to the advancing direction of the vehicle 100, and/or the right motor applies a slight forward rotational torque to the right wheel to cause the right wheel to slightly rotate with respect to the same direction as the advancing direction of the vehicle 100, thereby correcting the inclination to the right and returning the position to the perpendicular direction.

A vehicle in which at least one of a front wheel section and a rear wheel section is configured from a left/right pair of wheels and which can be propelled by rotating a wheel by an activating force of a driver of the vehicle includes a wheelchair and a wheelbarrow in addition to a cycle with three or more wheels.

It should be further understood by persons skilled in the art that although the foregoing descriptions have been made on embodiments of the present invention, the present invention is not limited thereto and various changes and modifications may be made without departing from the spirit of the present invention and the scope of the appended claims.

### REFERENCE SIGNS LIST

- 100: vehicle
- 101: first wheel
- 102: second wheel
- 103: third wheel
- 104: first motor
- 105: second motor
- 106: inclination sensor
- 107: activating force sensor
- 108: velocity sensor
- 109: battery
- 110: pedal
- 111: saddle
- 112: handle
- 113: suspension mechanism
- 114: vehicle body controller
- 115: first motor driver
- 116: second motor driver
- 117: control device
- 118: inclination signal
- 119: activating force signal
- 120: velocity signal
- 121: control signal
- 122: suspension shaft
- 123: first arm
- 124: second arm

## Claims

1. A vehicle in which at least one of a front wheel section and a rear wheel section is configured from a left/right pair of wheels and which is capable of being propelled by an activating force of a driver, wherein
a condition of the vehicle is detected, a rotational force of each of the pair of wheels is capable of being controlled independently of one another in response to the detection, and
the pair of wheels are attached to the vehicle via a suspension mechanism.

2. The vehicle according to claim 1, wherein the pair of wheels are capable of being inclined with respect to the vehicle by the suspension mechanism.

3. The vehicle according to claim 1 or 2, wherein the pair of wheels are capable of operating, independently of one another, with respect to a height direction of the vehicle by the suspension mechanism.

4. The vehicle according to any one of claims 1 to 3, comprising:
a battery;
a pair of motors that are connected with the battery and are configured from a motor for controlling a rotational force of one of the pair of wheels and a motor for controlling a rotational force of the other of the pair of wheels;
a sensor that detects the condition and transmits a condition signal based on the detection;
a vehicle body controller that performs arithmetic processing of the condition signal and transmits a control signal for controlling the pair of motors; and
a motor driver that controls power supply between the battery and the pair of motors based on the control signal transmitted from the vehicle body controller, wherein
the motor driver controls each of outputs of the pair of motors independently of one another to be capable of controlling each of the rotational forces of the pair of wheels independently of one another.

5. The vehicle according to claim 4, wherein the sensor includes an inclination sensor that detects an inclination of the vehicle with respect to a perpendicular direction, and the vehicle body controller is capable of performing arithmetic processing of the condition signal transmitted from the sensor so as to correct the condition and of transmitting the control signal.

6. The vehicle according to claim 5, wherein the sensor further includes an activating force sensor that detects the activating force by the driver of the vehicle, and the vehicle body controller is capable of performing arithmetic processing of the condition signal transmitted from the sensor so as to correct the condition and of transmitting the control signal.

7. The vehicle according to claim 5 or 6, wherein the sensor further includes a velocity sensor that detects a velocity of the vehicle, and the vehicle body controller is capable of performing arithmetic processing of the condition signal transmitted from the sensor so as to correct the condition and of transmitting the control signal.

8. The vehicle according to any one of claims 4 to 7, wherein at least one of the pair of motors has a function of a generator, and the at least one of the pair of motors is capable of providing a reverse rotational torque to the wheel and of supplying power to the battery via the motor driver by recovering travel energy of the vehicle by the function of the generator.
